Europäisches Patentamt

European Patent Office

Office européen des brevets

(11) Publication number: **0 137 903**

**B1**

## (12) EUROPEAN PATENT SPECIFICATION

(45) Date of publication of patent specification: **24.08.88**

(51) Int. Cl.⁴: **F 16 K 17/16**

(21) Application number: **84106090.8**

(22) Date of filing: **28.05.84**

(54) Rupture disc.

(30) Priority: **20.09.83 US 533854**
**20.09.83 US 533982**
**20.09.83 US 534061**
**20.09.83 US 534097**
**20.09.83 US 534176**

(43) Date of publication of application:
**24.04.85 Bulletin 85/17**

(45) Publication of the grant of the patent:
**24.08.88 Bulletin 88/34**

(84) Designated Contracting States:
**AT BE CH DE FR GB IT LI LU NL SE**

(56) References cited:
**EP-A-0 055 909**
**FR-A-2 252 520**
**FR-A-2 400 653**
**GB-A-2 114 666**
**US-A-3 478 761**
**US-A-3 484 817**
**US-A-4 072 160**

(73) Proprietor: **CONTINENTAL DISC CORPORATION**
**4103 West Riverside**
**Riverside Missouri (US)**

(72) Inventor: **Mozley, Robert M.**
**9211 Vaughn**
**Raytown Missouri (US)**

(74) Representative: **Baillie, Iain Cameron et al**
**c/o Ladas & Parry Isartorplatz 5**
**D-8000 München 2 (DE)**

Courier Press, Leamington Spa, England.

## Description

The present invention relates to safety pressure relief devices and, in particular, to reverse buckling rupture discs.

Relief devices of the type commonly known as rupture discs have been utilized by industry for many years to provide a safety mechanism to relieve excessive pressure from an over-pressurized system or vessel in a reliable manner. The rupture disc is most frequently placed in a vent for a pressure vessel or the like so as to prevent flow of fluid through the vent until the disc ruptures. Through the years, numerous improvements have been made in the rupture disc concept in order to reduce the cost and to improve the reliability of the disc.

A specific type of disc normally referred to as a reverse buckling rupture disc has also been utilized for a number of years and functions under the principle that a dome is formed in the disc which is positioned in the vent such that the dome points toward or faces the pressure side of the vent, that is, the convex side of the dome faces the internal portion or upstream side of the vent wherein pressurized fluid is likely to produce an overpressure which would be dangerous or destructive if not relieved. One advantage of reverse buckling type discs is that systems being protected by the discs can be operated at pressures relatively close to the bursting pressure of the disc without producing fatigue and failure which occurs in many forward bursting discs when operated for long periods of time near the rated bursting pressure of such discs. The dome, when fluid pressure reaches a preselected pressure for which the dome was designed to rupture, starts to collapse, that is, the column or arch of the dome on one side thereof starts to buckel. It is believed that as the arch on one side of the dome starts to collapse, a buckling type wave typically propagates across the surface of the dome to the opposite side of the dome where total collapse eventually occurs. This buckling wave tends to create a whiplash effect on this opposite side of the dome so that the dome at this location is rather violently urged in the direction to which the concave portion of the dome faces (that is, the downstream side of the vent). Many of the reverse buckling rupture discs include knife blades positioned on the concave side of the dome which are normally in spaced relationship to the dome but which are engaged by the dome upon buckling. The knives cut the dome, typically in such a pattern as to cause petals which are held to a flange portion of the disc by tab regions or the like.

Knife blade assemblies for reverse buckling rupture discs add substantially to the cost of such discs and are subject to failure due to corrosive activities of the fluids within the vent system, damage during handling or simply because a mechanic forgets to install the knife assembly which in normal discs results in disc bursting pressures that are many times the rated pressures of such discs. It has, therefore, been a goal of the rupture disc industry to produce a disc of the reverse buckling type which does not include knife assemblies, but which is highly reliable. One reverse buckling rupture disc, which was specifically designed to rupture without the use of knife blades, incorporates the concept of placing grooves, scores or etchings, especially in criss-cross or circular patterns on concave or convex faces of a reverse buckling rupture disc dome. A dome of this type can be seen in United States Patent No. 3,484,817 of Wood. In the device of that patent the rupture disc dome buckles, reverses and fractures along the lines of weakness produced by the grooves so as to form petals which are held to the remainder of the rupture disc assembly.

Another prior assembly is disclosed in US Patent 4,072,160 of Hansen. In the device of that patent the rupture disc buckles, reverses and contacts a knife blade, said rupturing being facilitated by a score line formed in a flange surrounding a disc dome. The score line is formed in the flange a clear distance from the juncture of the flange and the dome.

There has been a continuing desire in the rupture disc industry to produce new types of reverse buckling rupture discs which have properties that make them especially suitable for specific purposes, more cost efficient, and/or make the disc more reliable. In particular, new reverse buckling rupture discs are desired which will function without the need for knife blades for cutting the disc on reversal, yet which will remain highly reliable so as to relieve within a relatively close tolerance of the predetermined rupture pressure necessary to protect the vessels or the like which are protected by the disc.

There has also been a problem associated with some reverse buckling rupture discs which do not have knife blade assemblies in that the disc can accidentally be inserted into the vent system with the concave side facing in the wrong direction. Therefore, it is important that the rupture disc relieve in either direction, although the relief in the backwards direction may normally be at a higher pressure.

There is also a problem in some systems with portions of the rupture disc being entrained with the fluid being relieved. Pieces of rupture discs can cause damage to pumps and the like if they are allowed to freely break away from the remainder of the rupture disc assembly upon rupture. Therefore, it is important that the rupture disc dome or petals of the rupture disc dome remain intact after rupture and that they remain attached to a remainder of the disc.

According to the present invention there is provided a reverse buckling rupture disc having a prebulged dome, a flange portion surrounding said dome, a transition region between said dome and said flange portion and a concentric groove, characterized in that said groove is provided in a substantial portion of said transition region.

According to a further aspect of the invention there is provided a rupture disc assembly including such a reverse buckling disc, characterized in that a mount is provided for securing the disc in a vent such that the disc prevents passage of fluid through the vent until rupture of the disc, in that the disc includes a tab area defined thereon in a portion of the transition region and a tear area in a remainder of the transition region.

A rupture disc assembly is provided which includes a domed or pre-bulged rupture disc of the type utilized to protect pressure vessels or the like from over pressure. The rupture disc is a reverse buckling disc. The improvements discussed herein derive from experimentation directed to finding a rupture disc which would not only relieve at a preselected pressure (normally the preselected pressure is approximately 2/3 of the maximum rated rupture pressure associated with the vessel or other processing equipment, to be protected by the disc), but also would relieve at a second preselected pressure, if the rupture disc were inadvertently installed backwards (such second pressure for example being approximately the maximum rated pressure of the vessel, again for example, at a pressure 1.5 times the first preselected pressure).

It was especially desired to produce a reliable reverse buckling rupture disc which would predictably rupture at such a first preselected pressure, and which would also rupture at said second preselected pressure if the disc were inadvertently placed in the vent line backwards, and further that the disc should rupture without the aid of a knife assembly as knife assemblies are expensive and may be susceptible to corrosion, damage, and the like which produces failure in the such knives or the knife blades may be accidentally left out of the assembly during installation.

With this in mind, numerous structures were tested but failed to have the predictable rupture pressures required of such devices. Contrary to conventional thought in the rupture disc industry against making any modifications in the region of the reverse buckling rupture disc between dome and flange portions (normally referred to as a transition area or region), other than to change the radius thereof, it was discovered that placing of a groove within the transition area produced suitable and highly repeatable release pressures in either direction.

A full circle groove in the transition area of a reverse buckling rupture disc produced highly repeatable results when the groove was manufactured in a consistent fashion. It is noted that the groove may effect the bursting pressure of the disc as compared to the disc before the groove is added, however, the important result with the groove as with other improvements discussed herein, is that the bursting pressure be consistently reproduceable in successive discs which are modified or produced in the same manner.

It was found that a satisfactory groove could be made by placing a die with a knife edge under pressure against the transition area and allowing the knife edge to penetrate the area. It was found that a particular knife blade had to be tested with each different disc to see if that blade was compatible with the disc. For example, flatter or oval edged knife blades were found to be suitable for discs which are thicker, while more V-shaped knife blades with a radius from about 0,00762 cm to 0,0381 cm (0.003 to 0.015 inch) on the edge were found to be better for relatively thinner discs. One suitable V-shaped knife blade for certain rupture discs was found to be a blade having in cross section a central axis which is perpendicularly aligned with the surface of the flange portion of the disc when forming the groove, sides of the blade which diverge generally from the central axis and specifically from a point or knife edge at angles of approximately thirty degrees, and an edge which had a radius of approximately 0,0127 cm (0.005 inches). The radially inner side of the knife blade is preferably placed close to or adjacent the domed portion of the disc and it is not unusual for the radius of curvature of the dome at its juncture with the transition region to change during manufacture of the groove. While the exact depth of penetration of the knife blade into the transition area varies with the desired bursting pressure in each direction, thickness of the disc and with materials of construction, it was found in some discs that a groove depth of approximately two-thirds the thickness of the transition area is often quite suitable for producing the effect of bursting at the first preselected pressure in one direction and bursting at a pressure approximately 1.5 times the first preselected pressure in the opposite direction, if the disc were inadvertently installed backwards. A groove depth of 40 to 50% of the disc normal thickness was often found to be sufficient to produce tearing upon buckling in most discs. However, it is specifically noted that depths of the groove cited herein are for purposes of example and that the depth required for a certain disc (that is a specific disc having a fixed thickness, material of construction, temper, etc.) to relieve at a certain pressure can only best be determined by experimentation. It is important that the reverse buckling rupture disc with the groove in the transition area be supported on the downstream side thereof (that is, on the side of the disc where fluid pressure would normally not be applied and also on what would normally be the concave side of the dome portion of the disc). The structure supporting the rupture disc in this manner preferably extends along substantially the entire portion of the transition area, especially where grooved. Actually, a modified transition region is normally formed when the groove is placed on the disc.

While the full circle grooving in the transition region works well for reverse buckling rupture discs wherein it does not matter if fragments of the ruptured discs are carried downstream in the vent line after the rupture disc bursts, it is often desirable to retain the rupture disc as an integral, although ruptured, unit even after bursting. For this, a hinge or tab is placed between the dome portion and the flange portion of the rupture disc. One method to provide such a tab, is that grooving is applied to the transition region in a partial circumferential manner so as to define such a tab region by that portion of the transition region which has not been grooved. For example, a thirty degree arc of the transition region may be left ungrooved while a continuous 330 degree remaining arc is grooved. Tabs of larger and smaller area have been found to be functional and the optimum tab arc depends on the particular disc.

While producing a tab region by not grooving a certain portion of the disc on the transition region functions well for certain discs and utilizations, it is found that normally the larger the ungrooved area, then the more unpredictable the bursting pressure of the disc becomes. In addition, in certain discs the violence of the rupture will cause a tear through such a tab region. It was found that a disc with a more reliable bursting pressure and yet with a tab region could be manufactured by utilizing a die with a generally continuous or full 360 degree arc knife, by changing the characteristics of the knife in the region desired to be left as a tab.

In particular, a portion of the knife edge is removed corresponding to the desired size of the tab, such that during the grooving process the knife does not form a groove in that portion where the edge is modified or at least does not form as deep a groove in the projected tab portion. The knife blade does apparently change the radius of curvature of the transition region adjacent the projected tab area even though it is not as deeply grooved if at all; and, while applicant does not wish to be restricted to a certain theory of operation, it is believed that this change in radius modifies the characteristics of the disc in such a manner as to produce a disc which relieves at a more predictable pressure. Preferably, the knife blade is placed on the disc flange portion upstream flat surface next to the dome portion, and thereafter pressure is applied to the blade to urge it to penetrate into the flange portion along the transition region and, in particular, in a manner so as to penetrate generally perpendicular to the flat sides of the flange portion. It is noted that the maximum depth of penetration of the knife blade in the transition region is preferably accurately controlled by use of stops or the like.

It is generally believed in the industry that reverse buckling rupture discs tend to collapse or buckle on one side of the dome at which time a buckling type wave propagates out over the top of the dome to the opposite side of the dome. As the wave hits the opposite side of the dome there is a whiplash effect which violently thrusts the side of the dome associated with such whiplash in a downstream direction and tears the dome from the flange portion, which tear then propagates back around the disc to the side where the buckling first occurred. This whiplash buckling effect is often sufficiently strong to break the tab region of the rupture disc, if failure of the disc first occurs opposite such tab. Therefore, in order to provide even more reliability to the tab in order to prevent fragmentation of the disc, it is desired to first initiate failure of the disc in the tab region so that the whiplash effect will occur opposite the tab region.

A suitable technique for inducing failure of the disc first in the area of the dome in close association with the tab region has been found to comprise substantially modifying the radius of curvature of the transition area adjacent (that is coextensive with) the tab region or adjacent a portion of the tab region. Pre-bulged rupture discs are often manufactured by applying fluid pressure to one side of flat plate of sheet metal stock while supporting the opposite side of the stock against a forming ring, the interior diameter of the forming ring defines the chordal diameter of the dome of the disc to be formed in the plane of the projected flange portion. The disc thus domes up through the forming ring. The edge of the forming ring is normally a fairly sharp 90 degree angle which forms a specific radius of curvature at the transition area. By breaking or rounding the radially internal edge of the ring where it engages the disc with a whetstone or the like, the radius of the curvature of the transition area of the resulting rupture disc varies where such rounding occurs in the forming ring as compared to where no rounding has occurred. In this way the radius of curvature can be increased along that portion of the transition area of the disc associated with the tab region to ensure initial failure of the dome in close proximity to the tab region (especially on an arc of the dome which is centered on the tab region and extends to near the dome crown).

A second method has also been found for inducing the initial failure of the dome at or relatively near a selected location. This second method comprises placement of a dent, dimple, or other deformation, which will generally be referred to herein as an indentation, in the dome itself at a location spaced from the transition region and further in spaced relationship to the crown of the rupture disc but in close proximity to the projected tab region. Preferably, the center of the indentation is directly on an arc of the dome extending between the top or crown of the dome and the tab region, that is located on the dome on an arc directly connecting the center of the tab with the dome crown. Such an indentation may take the form of a dot, an elongate chord or arc running generally parallel to the transition region of the disc, a series of dots or lines defining indentations, or the like. It has been found that the failure of the dome may occur anywhere along the indentation; therefore, a relatively short indentation, for example not exceeding thirty degrees in arc, may be desirable for certain applications but larger indentations do function to ensure failure somewhere along the indentation. It is preferred that the indentation not substantially reduce the wall thickness of the dome and that it be placed unsymmetrically with respect to the dome. The height of the placement of the indentation relative to the overall height of the dome may vary in accordance with the desired failure pressure (typically, the closer to the crown, the greater reduction in rupture pressure for a particular disc). A suitable height for an indentation has been found to be, for example, approximately 0,1524 cm (0.06 inches) from the transition region for some discs. Again optimum shape and placement of the indentation for a particular disc is found by testing.

Suitable indentations can be produced in the dome by placing an edge or point against the dome at the desired location while applying pressure to the opposite side of the dome. This can advantageously be accomplished in conjunction with the pre-bulging of the disc. In particular, a second indentation ring may be used adjacent the bulge forming ring which forming ring defines the perimeter of the dome during formation thereof. Such an indentation ring rests atop the bulge forming ring and has an edge or point against which the dome is urged during formation thereof. Spacing of the indentation ring from the flange portion is controlled by the thickness of the forming ring. Suitable types of rings have been found to include a circular ring which has the same interior diameter as but is slightly non-concentrically aligned with the bulge forming ring so as to place a dent in the dome at the location above or in close association with the projected tab region. Other rings include those concentrically aligning with the bulge forming ring but having a curved or linear edge on the radially inner side of a projection extending radially inwardly from the ring. It has been found that the relief pressure of the disc varies significantly with which type of indentation ring is utilized so again testing must be used to find the relief pressure of a given disc with a specific indentation, but, if all factors remain the same for consecutive discs, then each should relieve at the same pressure. The indentation can also be formed in a procedure separate from the pre-bulging procedure.

Finally, it has been found that the force associated with rupture of certain discs will tear the tab region, even when initial failure of the disc is on the side of the dome associated with the tab region. It has been found that, if an arcuate projection extending radially inward from the side of the vent below the tab region is provided for the dome to wrap about upon rupture while the tab is still intact, then the tab region is less likely to tear. When it is indicated herein that the projection is below or aligned with the tab region, it is meant that the projection should be downstream in the vent relative to the unruptured disc, on the concave side of the rupture disc prior to rupture, and could refer to such a projection which was actually spacially "above" the disc but still downstream from same. In particular, the projection should be aligned such that as the dome pivots about the hinge formed by the tab region upon rupture, the dome engages the projection. Projections which have a linear or chordal engaging surface have been previously used in the art, but have been found to sometimes allow the dome to continue to rip along the tab region and, therefore, were not generally found to be satisfactory for the disc described herein. On the other hand, projections which are relatively arcuate in nature and project radially inward from the side of the vent, especially those that are almost circular or nearly approximating the curvature of the dome were found to be most suitable.

A suitable projection for certain uses was found to be one that is generally flat on sides thereof facing toward and away from the rupture disc prior to bursting and which has the facing surface in a plane which is generally adjacent a plane defined by the downstream side of the flange portion. Further, the example projection has a thickness of approximately 0,1524 cm (0.060 inches), has a radially inwardly projecting edge which is almost circular, and has a radius roughly between one-fourth and one-fifth the radius of the inner diameter of the disc flange portion. The example projection being attached to and extending along a downstream support ring for the disc through an arc length which is preferably slightly longer than the arc length associated with the tab region. For example, if the arc of the tab region is approximately 30 degrees, then the projection would extend for an arc of approximately 34 degrees. In this manner, the transition area of the disc tears along the groove upon rupture to the tab region and such that the edges of the dome next to the tab region do not align exactly with the projection but tend to wrap thereabout so as to further secure the ruptured dome to the projection until a maintenance crew can change the disc.

It is also foreseen that a circumferential groove may be utilized in a transition region of a conventional forward failure rupture pre-bulged disc to allow a failure if the disc is inserted backward and may be utilized in conjunction with typical grooves, slits or other devices on the dome of such forward acting disc which grooves, etc. cause failure in a normal forward direction.

It is noted that in some of the drawings, the scale of certain features have been exaggerated, where necessary, in order to show details thereof. This is especially true of the thickness of the various rupture discs relative to the assembly associated therewith. The drawings constitute a part of this specification and include exemplary embodiments of the present invention and illustrate various objects and features thereof.

Figure 1 is a side elevational view of a rupture disc assembly according to the present invention installed in a vent pipe between support rings with portions broken away to illustrate details of the assembly.

Figure 2 is a top plan view of the rupture disc and support rings of Figure 1 with portions of the lower support rings shown in phantom.

Figure 3 is an enlarged, fragmentary cross-sectional view of the rupture disc and support rings taken along line 3—3 of Figure 2.

Figure 4 is an enlarged, fragmentary cross-sectional view of the rupture disc and support rings taken along line 4—4 of Figure 2.

Figure 5 is an exploded cross-sectional view of the assembly shown in Figure 1.

Figure 6 is a separated perspective view of the rupture disc and the lower support ring at a reduced scale.

Figure 7 is a fragmentary cross-sectional view of the rupture disc assembly shown in Figure 1 after rupture of the rupture disc.

Figure 8 is a top plan view of a first modified rupture disc and support ring therefor for use in conjunction with the rupture disc assembly of Figure 1, with portions broken away to show the support ring in greater detail.

Figure 9 is an enlarged fragmentary cross-sectional view of the first modified rupture disc taken along line 9—9 of Figure 8.

Figure 10 is a side elevational view of the first modified rupture disc.

Figure 11 is a perspective view of the first modified rupture disc and support ring thereof showing details of the disc and ring in phantom.

Figure 12 is a perspective view of a second modified rupture disc and support ring therefor for use in the rupture disc assembly shown in Figure 1.

Figure 13 is an enlarged fragmentary cross-sectional view of the second modified rupture disc and support ring taken along line 13—13 of Figure 12.

Figure 14 is a top plan view showing a third modified rupture disc for use in conjunction with the rupture disc assembly of Figure 1.

Figure 15 is an enlarged fragmentary cross-sectional view of a fourth modified rupture disc for use in the rupture disc assembly of Figure 1.

Figure 16 is a perspective view at a reduced scale of a planar blank of material to be formed into a reverse buckling rupture disc according to the present invention.

Figure 17 is a perspective view showing a reverse buckling rupture disc produced from the blank of Figure 16 just following the formation of a bulge at a central portion of the disc and showing a die ring through which the bulge is formed with portions of the ring broken away to show detail thereof.

Figure 18 is an exploded cross-sectional view of a rupture disc and a grooving apparatus having a knife blade die for placing a circumferential groove in the transition area between flange and dome portions of the disc.

Figure 19 is an enlarged fragmentary cross-sectional view of the apparatus and disc of Figure 18 showing the disc during the actual process step of forming a groove in the transition area thereof.

Figure 20 is an exploded perspective view at a reduced scale of a rupture disc and the die from the grooving apparatus shown in Figure 18 following etching of the disc in the transition area.

Figure 21 is an enlarged fragmentary cross-sectional view of a reverse buckling disc during a step in a manufacturing process wherein the dome of the disc is urged upward through a forming ring.

Figure 22 is a view similar to Figure 21 at a different location around the ring and showing a change in the radius of the transition area associated with the rupture disc.

Figure 23 is an exploded perspective view at a reduced scale of a rupture disc with upper and lower supporting rings during another step in the process of manufacturing of an assembly such as is shown in Figure 1.

Figure 24 is an enlarged fragmentary cross-sectional view of the rupture disc and the support rings of Figure 23 after spot welding same together.

Figure 25 is a fragmentary cross-sectional view similar to that of Figure 24 but further enlarged in comparison and showing a rupture disc and support ring for use in the assembly of Figure 1 and illustrates a groove in the transition region between the dome and flange area thereof.

Figure 26 is a top plan view of the rupture disc and ring assembly shown in Figure 23 with portions broken away to show detail thereof.

Figure 27a is a top plan view of a dome forming a ringlet set for use in a step in the process of forming a reverse buckling rupture disc with an indentation on a dome thereof.

Figure 27b is a view similar to Figure 27a and illustrates a first modified dome formation ringlet set for forming a first modified indentation on a rupture disc during a process in the manufacture thereof.

Figure 27c is a view similar to Figure 27a and shows a second modified indentation formation ringlet set for forming a second modified indentation on a rupture disc.

Figure 28a is a top plan view showing a fifth modified rupture disc having an indentation formed thereon by the ringlet set shown in Figure 27a.

Figure 28b is a view similar to Figure 28a showing a sixth modified rupture disc having an indentation formed thereon by the ringlet set shown in Figure 27b.

Figure 28c is a view similar to Figure 28a showing a seventh modified rupture disc having an indentation formed thereon by the ringlet set shown in Figure 27c.

Figure 29 is a cross-sectional view of a rupture disc during a step in the process of manufacture thereof and shown in a rupture disc bulge forming apparatus suitable for use alternatively with the ringlet sets shown in Figures 27a, 27b and 27c for the formation of an indentation on the rupture disc.

Figure 30 is a cross-sectional view of a rupture disc similar to the disc shown in Figure 29 but having an indentation formed thereon by the ringlet set of Figure 27a.

Figure 31 is a perspective view of a modified grooving apparatus knife holding member similar to the die of Figure 20.

As required, detailed embodiments of the present invention are disclosed herein, however, it is to be understood that the disclosed embodiments are merely exemplary of the invention which may be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

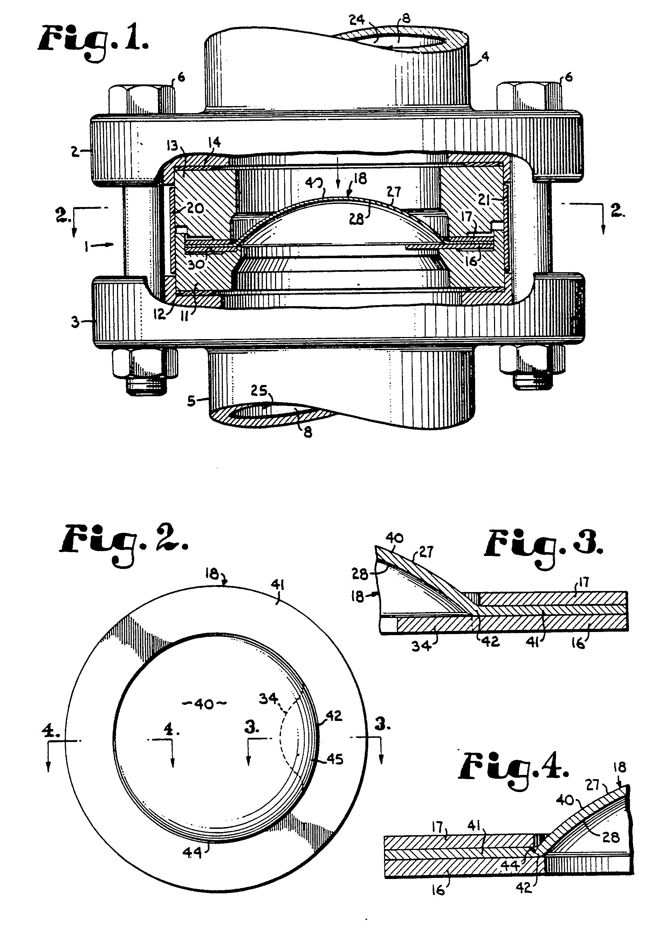

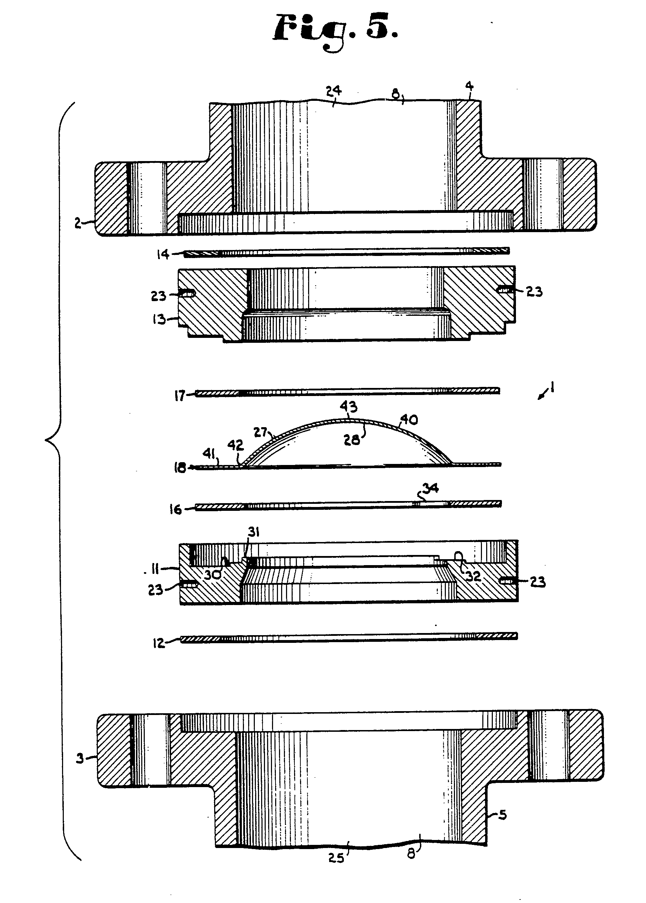

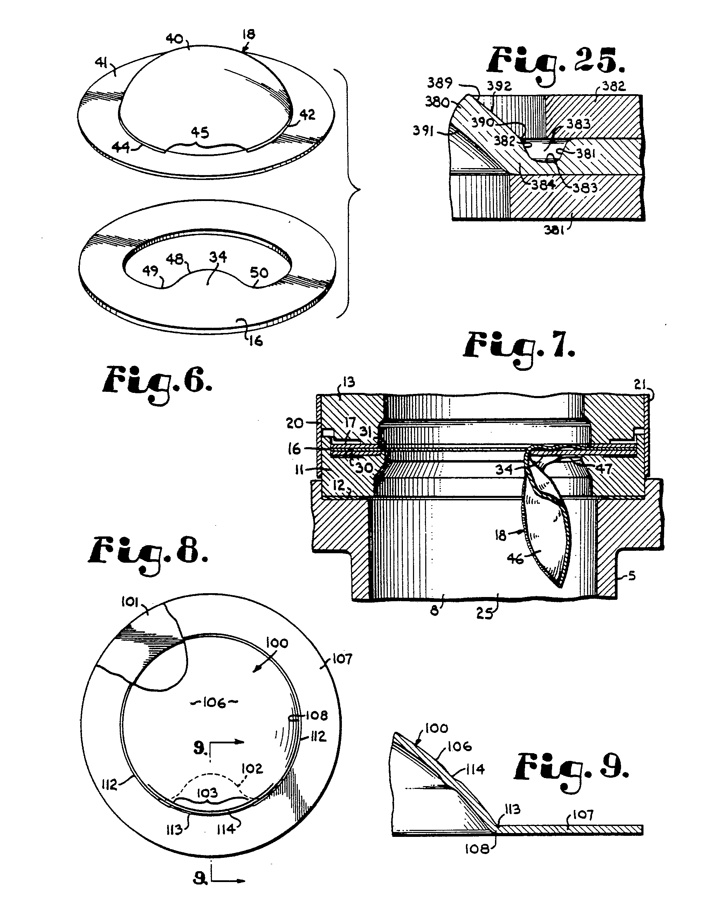

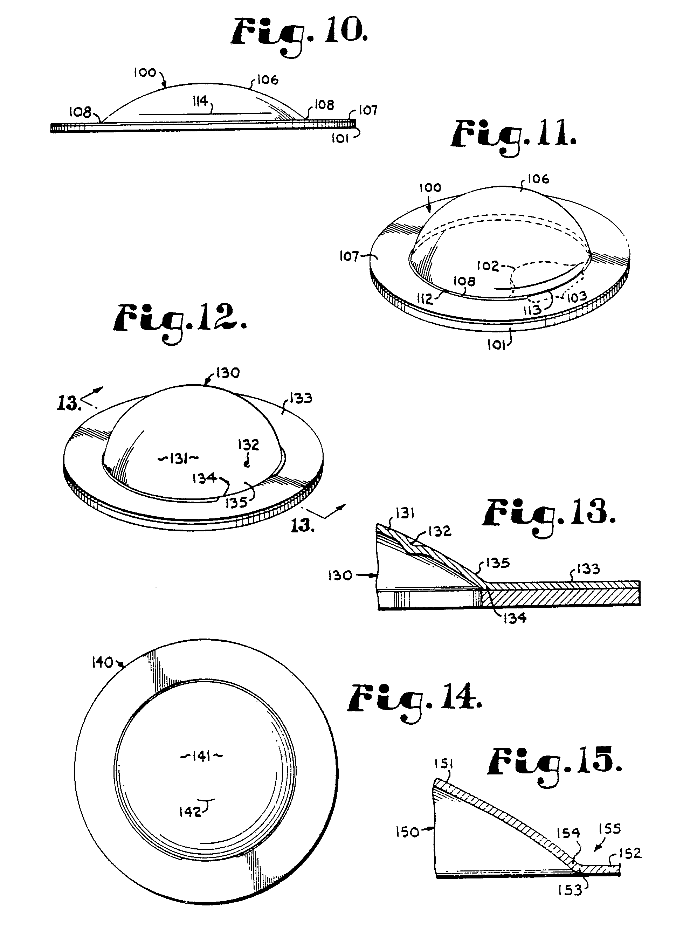

The reference numeral 1 generally designates a safety pressure relief assembly according to the present invention. The assembly 1, as is best seen in Figure 1 and in the exploded view in Figure 5, is secured between opposite flanges 2 and 3 which are end flanges of vent pipe sections 4 and 5 respectively and which are securely held together so as to clamp the assembly 1 therebetween by a plurality of circumferentially spaced bolts 6. The vent pipe sections 4 and 5 form part of a vent system including an interior channel 8. The vent system includes an upstream portion which is associated with vent pipe section 4 and which joins with a pressure vessel or the like (not shown) to be protected by the vent system and would also normally be the side of the vent system to be positively pressurized by fluid therein. Vent pipe section 5 discharges to a safe location (not shown) to relieve excess pressure communicating therewith from vent pipe section 4 upon relief by the assembly 1. The assembly 1 comprises a downstream support structure 11 (Figure 5), a downstream seal member 12, an upstream support structure 13, and an upstream seal member 14. The assembly 1 further comprises a downstream support ring 16, and upstream support ring 17, and a reverse buckling rupture disc 18.

When the assembly 1 is in use, seal member 14, the support structure 13, the support ring 17, the rupture disc 18, the support ring 16, the support structure 11, and seal member 12 are in sequential, abutting and snug relationship with respect to one another so as to be generally resistant to fluid pressure leaks in a radially outward direction, this configuration being shown in Figure 1. The assembly 1 is retained together by keeper brackets 20 and 21 which are secured to both of the support structures 11 and 13 by suitable bolts (not shown) or the like received in threaded apertures 23. There is a generally unrestricted upstream channel portion 24 extending from the upstream or convex side 27 of the rupture disc 18 to the vessel or the like being protected by the assembly 1 and a generally unrestricted downstream channel portion 25 extending from a downstream or concave side 28 of the rupture disc 18. The downstream support structure 11 includes an annular seat 30 for the support ring 16 and further includes an annular boss 31 which is positioned radially inward from the seat 30. The boss 31 extends circumferentially in conjunction with the seat 30 except for a sector 32 of the seat which angularly aligns with an arcuate projection 34 on the support ring 16.

Attention is directed to the support rings 16 and 17 and the rupture disc 18, such as are shown in greater detail in Figures 2, 3, 4 and 6. The rupture disc 18 is of the type commonly referred to as a reverse buckling rupture disc having a central pre-bulged dome 40, a generally planar flange portion 41 which extends radially outward from a periphery of the dome 40, and a transition area or region 42 between the dome 40 and the flange portion 41. The dome 40 has the disc convex side 27 and concave side 28 thereon, an apex or crown 43 and has a generally uniform thickness, although the thickness normally varies somewhat due to variances induced during the pre-bulging of the dome 40.

The rupture disc 18 further includes a semicircular groove 44 which is in the transition region 42. A portion of the transition region 42 generally indicated by the reference numeral 45 does not include a groove therein and is a projected or designated hinge or tab region for the rupture disc 18 at the time of bursting. That is, upon bursting it is desired that the dome 40 tear away from the flange portion 41 along the groove 44 and that portion of the transition region 42 which is coextensive with the groove 44, while preferably the tab region 45 remains intact or untorn.

Figure 4 shows a cross-sectional view including a portion of the transition area 42 having a groove 44 therein and Figure 3 shows a cross-sectional view of a portion of the transition region 42 which does not include a groove. It is noted that preferably the upstream support ring 17 extends radially outward from approximately the center of the groove 44. In contrast, the support ring 16 extends radially inward of the transition region 42 so as to support the transition region 42 at least in the portion thereof including the groove 44. The support ring 16, as is seen in Figure 6, includes the arcuate projection 34 which is downstream of and preferably aligned with the tab region 42 such that, when the rupture disc 18 bursts the dome 40 will pivot about the hinge region 42 and engage the arcuate projection 34, as is shown in Figure 7 wherein the ruptured and somewhat crumpled dome, as indicated by the reference numeral 46, wraps about the projection 34 especially in the area of the edges 47 of the dome 46 that tore from the flange portion 41 but which were adjacent the hinge region 42. The projection 34 is arcuate along its radially inward edge 48. The arcuate projection 34 has radially outward ends thereof 49 and 50 which include an arc therebetween which is generally similar to but slightly larger than the arc encompassed by the tab region 45.

Shown in Figures 8, 9, 10 and 11 is a first modified embodiment of the present invention including a first modified rupture disc 100 and support ring therefor 101 which are suitable for use in the assembly 1 as alternative replacements for the disc 18 and support ring 16 respectively. The support ring 101 is essentially similar to the support ring 16 and includes an arcuate projection 102 which extends radially inward therefrom. The arcuate projection 102 is downstream aligned with a tab region 103 of the disc 100. The disc 100 includes a dome 106 with a radially outward extending flange portion 107 joined by a transition region 108. A partially circumferential, relatively deep groove 112 extends entirely around the dome 106 except in the tab region 103 wherein there is a very shallow groove 113 compared to the relatively deeper groove 112. An indentation 114 is positioned in the dome as is best shown in Figure 9. The indentation 114 is approximately centered on the tab region 103 and is spaced closely therefrom. The indentation 114 comprises an elongate dent which is oriented approximately parallel to the transition region 108.

Figures 12 and 13 show a second modified disc 130. The disc 130 is similar to the disc 100 except that instead of an elongate indentation 114, as seen in disc 100, the disc 130 has a dimple or dot indentation 132 on the dome 131 thereof. The disc 130 has a flange portion 133 and transition region 134 which are similar to the same features in the disc 100 in the previous embodiment. A tab region 135 is centered to be aligned with the indentation 132.

Figure 14 shows a third modified rupture disc 140 according to the present invention including a dome 141 having an elongate indentation 142 therein. The disc 140 is similar to the disc 100 except for the placement and size of the indentation 142 as compared to the indentation 114.

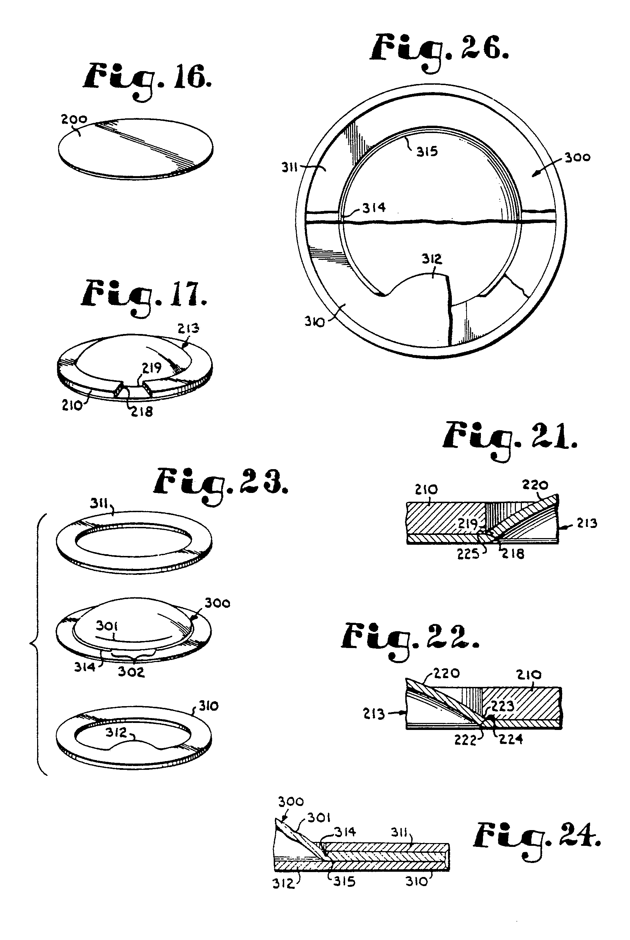

Figure 15 shows a fourth modified rupture disc 150 according to the present invention. Disc 150 includes a dome 151, a flange portion 152, and a transition region 153 between the flange portion 152 and the dome 151. A tab region 154 is specifically shown, and this disc 150 has a non-tab region (not shown) in the transition region 153 similar to that of the disc 100. The disc 150 also has a transition region with a slightly increased radius of curvature generally indicated by the arrow 155 in a portion of the transition region 153 as compared to the remainder thereof and specifically in the tab region 154.

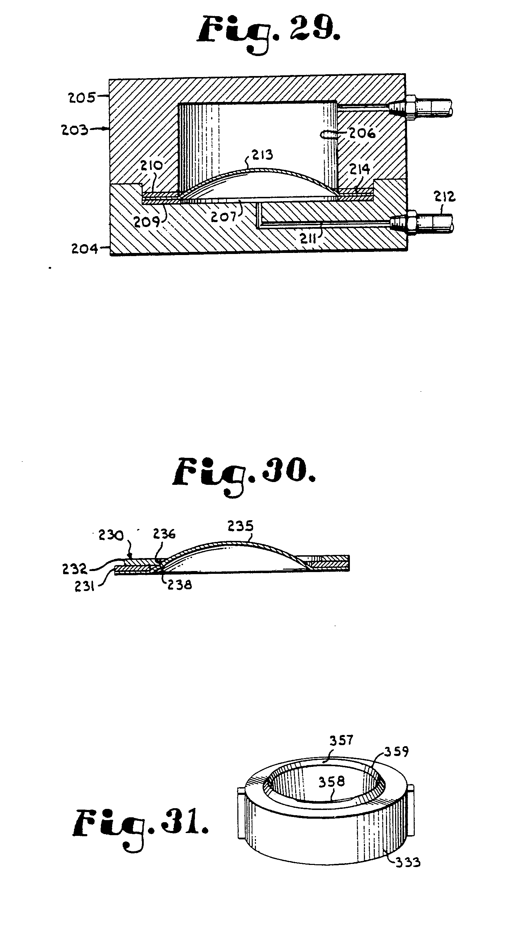

Figures 16 through 26 illustrate different steps in the method of manufacture of a rupture disc of the present invention and illustrate various structures utilized in the manufacture of the present invention. Figure 16 illustrates a planar sheet of metal or blank 200 from which a rupture disc, such as the previously described disc 18, is manufactured. Figure 29 illustrates an apparatus 203 for forming a rupture disc from such a blank 200.

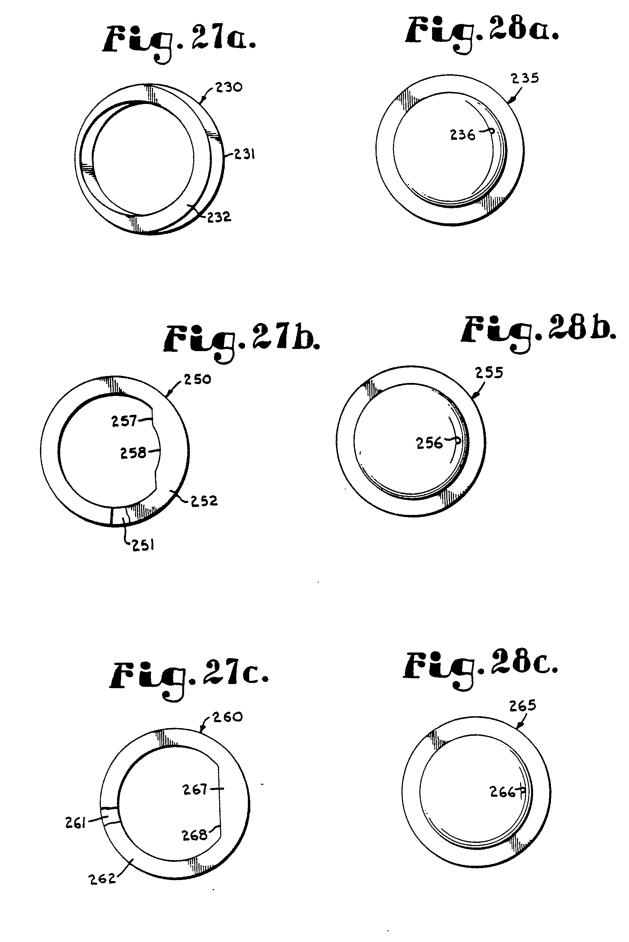

The apparatus 203 includes a lower member 204 and an upper member 205 which generally mate together so as to define a chamber 206 therebetween. A first sealing ring 209 is placed in a bottom of the chamber 206 followed by the planar sheet of metal 200 followed by at least one additional bulge forming ring 210. Preferably the outer diameter of the rings 209 and 210 and the blank 200 are approximately the same as the inner diameter of the chamber 206 where they interengage. A hydraulic fluid supply passage 211 communicates with a suitable source of hydraulic fluid through a hydraulic hose 212 with a lower portion 207 of the chamber 206, which chamber portion 207 is shown below the blank 200, to be pre-bulged into a domed rupture disc 213. It is noted that the blank 200 is not shown in Figure 29 but the blank 200 occupies the same region as a flange portion 214 of the disc 213 as well as the region surrounded by the flange portion 214. After the blank 200 is placed in the apparatus 203, fluid is forced into the chamber portion 207 through the passage 211 while the disc blank 200 is securely held about the edges thereof in position so as to pre-bulge into the disc 213. Figure 17 shows the disc 213 and the upper ring 210. As shown in Figure 21, a lower inner radial edge 218 of the ring 210 defines an outer boundary or periphery 219 of a dome 220 of the disc 213. It is noted that the edge 218 is a sharp edge formed by sides of the ring 210 which meet at almost 90 degrees with respect to one another. Figure 22 shows a view which is similar to Figure 1 except it is taken at another location along the ring 210 whereat the sides of the ring 210 join in a rounded edge 222 which defines the limits or periphery 223 of the dome 220 at that location. A transition region 224 shown in Figure 22 has a larger radius of curvature at that location than a transition region 225 shown in Figure 21. This change in radius and/or slope is similar to the concept previously shown in and described for Figure 15.

Shown in Figure 27a is an alternative ring set 230 for use in conjunction with the apparatus 203 in place of the ring 210. The set 230 shown in Figure 30 in conjunction with a disc 235 includes a lower forming ring 231 similar to the ring 210 and an upper indentation ring 232 which has a similar internal diameter to the ring 231 but is positioned somewhat eccentrically thereto. The ring set 230 is utilized in the production of the rupture disc 235 shown in Figure 28a, having an indentation 236 thereon produced by a radially inward and lower edge 238 of the indentation ring 232 engaging the disc 235 as same is pre-bulged. An outer portion of the ring 232 is removed so that the ring set 230 has an overall outer diameter approximating the diameter of the disc 235 so that the ring set 230 and disc will set in the apparatus 203 without lateral slippage therebetween when the disc 235 is being bulged.

Figure 27b shows a second offset ring set 250 having a lower forming ring 251 which is generally concentric with an upper indentation ring 252. Figure 28b shows a rupture disc 255 manufactured in the apparatus 203 wherein the ring set 250 has been substituted for the ring 210. An indentation 256 is formed on the rupture disc 255 by a radially inward extending projection 257 having an inner surface 258 with a lower edge which engages the disc 255 during pre-bulging and produces the indentation 256. The surface 258 is arched to approximate the arc of the disc 255 where they engage and includes linear feathering on opposite sides of the surface 258.

Figure 27c shows yet another ring set 260 having a lower forming ring 261 and a generally concentric upper indentation ring 262. Figure 28c shows a rupture disc 265 manufactured in the apparatus 203 wherein the ring 210 has been replaced by the ring set 260. The upper indentation ring 262 includes a radially inwardly extending projection 267 generally comprising a chord or a linear joining of the two sides of the ring 262 and having an inner surface 268 with a lower edge which engages a disc 265 (Figure 28c) during pre-bulging thereof so as to form an indentation 266 therein.

After pre-bulging and indenting (where done) in the apparatus 203, rupture discs, such as the disc 300 in Figure 23, which were manufactured in the apparatus 203 are removed. The disc 300 has an indentation 301 thereon and an tab region 302 located in close association to the indentation 301. The disc 300 is then joined with an upstream support ring 311 and a downstream support ring 310. The rings 310 and 311 are similar to rings 16 and 17 shown in Figure 1. The downstream ring 310 includes an arcuate projection 312 which is aligned to be centered relative to the tab region 302 and the indentation 301. The disc 300 and the rings 310 and 311 are then preferably joined together by welding or the like as shown in Figures 24 and 26 after groove 314 is formed in a transition region 315 thereof.

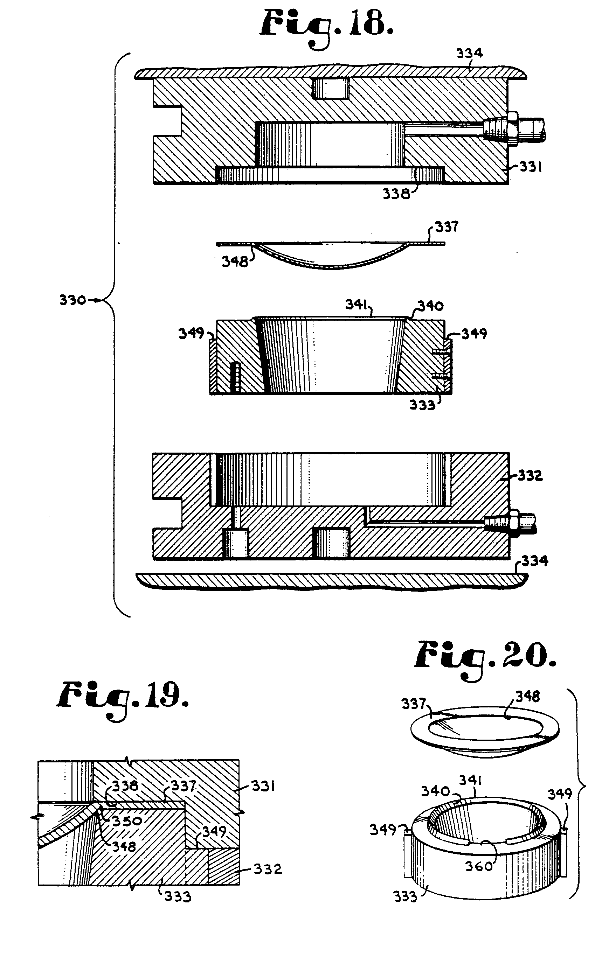

A grooving apparatus 330 for performing the grooving process is shown in Figures 18, 19 and 20. The apparatus 330, as shown in Figure 18, includes an upper holder member 331, a lower holder member 332 which mates with the upper holder member 331, a die or knife holding member 333, and pressure exerting means such as the partially shown hydraulic press mechanism 334. A pre-bulged disc 337 is placed in a seat 338 in the upper holder member 331. The knife holding member 333 includes a circular knife 340 having an upper edge 341 and having a radius slightly larger but approximately the same radius as the inner edge of a transition area 348 of the disc 337. The knife edge 341 is placed in engagement with the disc transition area 348, as shown in Figure 19, and pressure is applied by the press 334. Stops 349 on the knife holding member 333 engage the upper holder 331 to facilitate proper grooving of the disc 337 so that the groove 350, as seen in Figure 19, has a proper depth associated therewith. The knife 340 shown in Figure 20 is only partially circumferential and includes a sector 360 in which the knife 340 is omitted to leave a portion of the disc transition area 348 ungrooved. The stops 349 are removable from the knife holding member 333 to facilitate alternative use of the other stops specifically designed for other particular depths and/or other disc thicknesses.

Alternatively, the knife 340 can be replaced by a completely circumferential knife member or also, alternatively, by a knife member 357, as shown in Figure 31 which is completely circumferential but for a portion 358 of the edge 359 of the knife blade which has been further rounded or had a portion of the edge removed so as to limit the depth of a groove in that region where the portion 358 engages the disc 337. The side of the knife in Figure 19 diverge from the edge 341 at an angle of approximately 60 degrees relative to one another and the cutting or grooving edge 359 has a radius of approximately 0.005 inches.

Figure 25 shows an enlarged section of a rupture disc 380 having lower support ring 381 and an upper support ring 382 associated therewith. The disc 380 has had a groove 383 according to the present invention placed in a transition region 384 thereof. The groove 383 was produced by a method similar to the groove 380 formed in the process shown in Figures 18 through 20. The groove 380 includes side walls 381 and 382 which diverge with respect to each other and at about 30 degrees each to an axis or vertical like bisecting the groove 380 and are joined by a connecting surface 383 having a radius of approximately 0,0127 cm (0.005 inches). The disc 380 has a dome 389, a periphery 390, a concave side 391 and a convex side 392.

## Claims

1. A reverse buckling rupture disc (18) having a pre-bulged dome (40), a flange portion (41) surrounding said dome, a transition region (42) between said dome and said flange portion and a concentric groove (44), characterized in that said groove (44) is provided in a substantial portion of said transition region.

2. A disc according to Claim 1, characterized in that said groove extends along a substantial first portion of said transition region and is discontinuous over a second portion of said transition region thereby defining a tab area (45) along said second portion of the transition region.

3. A disc according to Claim 2, characterized in that a first radius of curvature is associated with said transition region along said groove, and a second radius of curvature is associated with said transition region in said tab area substantially different from said first radius of curvature.

4. A disc according to Claim 1, characterized in that said groove is substantially coextensive with said transition region, and in that said groove has a first portion with a first depth in a tab area and a second portion with a second depth therewith, said groove first portion being generally continuous.

5. A reverse buckling rupture disc according to Claim 1, characterized in that the dome has a crown at the apex thereof and a periphery spaced radially and remote from said crown, in that the groove (113) in said transition region (108) defines a tab area (103) joining said dome and said flange, said groove having a reduced depth in said tab area as compared to a remainder of said groove, and in that failure initiating means is positioned between said tab area and said crown at the apex of the dome to effect initial failure of said disc during rupture thereof between said tab area and said crown.

6. A disc according to Claim 5, characterized in that a tear region extends along a first portion of said transition region whereby said dome separates from said flange along said tear region during rupture of said disc, in that the remainder of said transition region not defined as said tear region defines a tab area (103) said tab area remaining integral to maintain the connection of said dome to said flange during rupture of said disc, and in that the failure initiating means is located on said dome between said tab area (103) and said crown.

7. A disc according to Claim 5 or Claim 6, characterized in that the failure initiating means comprises an indentation (114) non-symmetrically placed on the dome and spaced from and between both said tab area and said crown, and in that the thickness of the dome at said indentation is approximately the same as the thickness of said dome over the remainder thereof.

8. A device according to Claim 5, characterized in that the failure initiating means comprises increasing the radius of curvature of the transition region within the tab area as compared to a remainder of the transition region.

9. A disc according to Claim 5, characterized in that mounting means (2, 3, 11, 16) is provided for mounting said disc in a vent system, said mounting means including a projection (34) extending radially inwardly at a location in downstream alignment with said tab area whereby when said rupture disc ruptures, said dome rotates about said tab area and engages said projection.

10. A reverse buckling rupture disc according to Claim 5, characterized in that the tab area (45) extends along a first portion of the transition region and hingedly connects said flange portion to said dome upon rupture of said disc, and in that the groove (44) is located in and is coextensive with a substantial length of said transition region outside of said transition region first portion, said groove cooperating with said tab area to facilitate tearing of said dome from said flange portion and to limit tearing in said tab area during rupture of said disc.

11. A rupture disc assembly including a reverse buckling rupture disc according to Claim 1, characterized in that a mount (2, 3) is provided for securing the disc (18) in a vent such that the disc prevents passage of fluid through the vent until rupture of the disc, in that the disc includes a tab area (103) defined thereon in a portion of the transition region and a tear area in a remainder of the transition region.

12. An assembly according to Claim 11, characterized in that the groove (44) has a sector with a depth associated therewith, said sector being continuous and coextensive with said transition region outside of said tab area.

13. An assembly according to Claim 11, characterized in that the dome when ruptured forms at least one petal hingedly connected to said flange portion by the tab area, and in that an arcuate projection (34) is positioned downstream of said petal such that said petal will engage said projection as the petal pivots on said tab area.

14. An assembly according to Claim 13, characterized in that the mount includes first (2) and second (3) support members and securing means (6) to lock said members together, an annular support ring (16) with relatively flat surfaces on both sides thereof and with a radially inward extending projection (34) thereon, said support ring being held in position by said support members, in that said flange portion (41) has a relatively flat downstream side, said flange portion flat side being supported by one of said support ring (16) flat surfaces, said support ring extending under substantially all of said transition region to supply support thereto.

**Patentansprüche**

1. Durchbiegbare Sollbruchscheibe (18) mit einem vorgewölbten Kuppelteil (40), einem den Kuppelteil umgebenden Flansch (41), einem Übergangsbereich (42) zwischen dem Kuppelteil und dem Flansch und einer konzentrischen Nut (44), dadurch gekennzeichnet, daß die Nut (44) in einem beträchtlichen Teil des Übergangsbereiches vorgesehen ist.

2. Scheibe nach Anspruch 1, dadurch gekennzeichnet, daß sich die Nut längs eines beträchtlichen ersten Teils des Übergangsbereiches erstreckt und längs eines zweiten Teils des Übergangsbereiches unterbrochen ist, so daß längs diese zweiten Teils des Übergangsbereiches ein Stegbereich (45) vorhanden ist.

3. Scheibe nach Anspruch 2, dadurch gekennzeichnet, daß dem Übergangsbereich längs der Nut ein erster Krümmungsradius zugeordnet ist und dem Übergangsbereich in dem Stegbereich ein zweiter Krümmungsradius zugeordnet ist, der sich von dem ersten Krümmungsradius beträchtlich unterschiedet.

4. Scheibe nach Anspruch 1, dadurch gekennzeichnet, daß die Nut im wesentlichen dieselbe Ausdehnung hat wie der Übergangsbereich und in einem Stegbereich einen ersten Teil mit einer ersten Tiefe besitzt und daß die Nut einen zweiten Teil mit einer zweiten Tiefe besitzt, wobei der erste Teil der Nut im wesentlichen kontinuierlich ist.

5. Durchbiegbare Sollbruchscheibe nach Anspruch 1, dadurch gekennzeichnet, daß der Kuppelteil einen gewölbten Scheitel und im Radialabstand von dem gewölbten Scheitel einen Umfang besitzt, daß die Nut (113) in dem Übergangsbereich (108) einen Stegbereich (103) bildet, der den Kuppelteil und den Flansch miteinander verbindet, daß die Nut in dem Stegbereich eine geringere Tiefe hat als im übrigen Teil der Nut und daß die Brucheinleitungseinrichtung zwischen dem Stegbereich und dem gewölbten Scheitel des Kuppelteils vorgesehen ist, so daß ein Bruch der Scheibe zwischen dem Stegbereich und dem gewölbten Scheitel beginnt.

6. Scheibe nach Anspruch 5, dadurch gekennzeichnet, daß sich längs eines ersten Teils des Übergangsbereiches ein Auffreißbereich erstreckt, so daß bei einem Bruch der Scheibe der Kuppelteil sich längs des Aufreißbereiches von dem Flansch trennt, daß der nicht den Aufreißbereich bildende, übrige Teil des Übergangsbereiches einen Stegbereich (103) begrenzt, der beim Bruch der Scheibe unversehrt bleibt, damit die Verbindung des Kuppelteils mit dem Flansch aufrechterhalten wird, und daß die Brucheinleitungseinrichtung auf dem Kuppelteil zwischen dem Stegbereich (103) und dem gewölbten Scheitel vorgesehen ist.

7. Scheibe nach Anspruch 5 oder 6, dadurch gekennzeichnet, daß die Brucheinleitungseinrichtung eine Einkerbung (114) aufweist, die auf dem Kuppelteil unsymmetrisch und im Abstand von dem Stegbereich und dem gewölbten Scheitel zwischen ihnen vorgesehen ist, und daß der Kuppelteil an der Einkerbung ungefähr dieselbe Stärke hat wie im übrigen Teil des Kuppelteils.

8. Einrichtung nach Anspruch 5, dadurch gekennzeichnet, daß zum Ausbilden der Brucheinleitungseinrichtung der Übergangsbereich in dem Stegbereich einen größeren Krümmungsradius hat als der übrige Übergangsbereich.

9. Scheibe nach Anspruch 5, dadurch gekennzeichnet, daß zum Montieren der Scheibe in einen Druckentlastungssystem eine Haltevorrichtung (2, 3, 11, 16) vorgesehen ist, die einen Vorsprung (34) hat, der sich stromab des Stegbereiches und mit ihr fluchtend radial einwärts erstreckt, so daß beim Bruch der Scheibe der Kuppelteil um den Stegbereich bis zur Anlage an dem Vorsprung schwenkt.

10. Durchbiegbare Sollbruchscheibe nach Anspruch 5, dadurch gekennzeichnet, daß sich der Stegbereich (45) längs eines ersten Teils des Übergangsbereiches erstreckt und beim Bruch der Scheibe den Flansch scharnierartig mit dem Kuppelteil verbindet und daß die Nut (44) in dem Übergangsbereich angeordnet ist und sich über eine beträchtliche Länge des nicht zu dem ersten Teil des Übergangsbereiches gehörenden Teil des Übergangsbereiches erstreckt und mit dem Stegbereich derart zusammenwirkt, daß beim Bruch der Scheibe das Abreißen des Kuppelteils von dem Flansch erliechtert und das Aufreißen in dem Stegbereich begrenzt wird.

11. Sollbruchscheibenanordnung mit einer durchbiegbaren Sollbruchscheibe nach Anspruch 1, dadurch gekennzeichnet, daß eine Halterung (2, 3) vorgesehen ist, die zum Befestigen der Scheibe (18) in einem Druckentlastungskanal dient, und zwar derart, daß die Scheibe bis zu ihrem Bruch einen Durchtritt von Fluid durch den Druckentlastungskanal verhindert, und daß die Scheibe in einem Teil des Übergangsbereiches einen Stegbereich (103) und in dem übrigen Teil des Übergangsbereichs einen aufreißbaren Bereich besitzt.

12. Anordnung nach Anspruch 11, dadurch gekennzeichnet, daß die Nut (44) einen ununterbrochenen Sektor besitzt, dem eine Teife zugeordnet ist und dieselbe Ausdehnung hat wie der Übergangsbereich außerhalb des Stegbereiches.

13. Anordnung nach Anspruch 11, dadurch gekennzeichnet, daß der Kuppelteil nach seinem Bruch mindestens einen blütenblattähnlichen Teil bildet, der durch den Stegbereich scharnierartig mit dem Flansch verbunden ist, und daß der bogenförmige Vorsprung (34) stromab des blütenblattähnlichen Teils derart angeordnet ist, daß der blütenblattähnliche Teil bei seinem Verschwenken um den Stegbereich zur Anlage an den Vorsprung gelangt.

14. Anordnung nach Anspruch 13, dadurch gekennzeichnet, daß die Halterung eine erstes (2) und ein zweites (3) Stützglied aufweist, ferner Befestigungsmittel (6) zum Festlegen der Stützglieder aneinander, einen Stützring (16), der auf beiden Seiten relativ ebene Flächen besitzt und der mit einem radial einwärtsgerichteten Vorsprung (34) versehen und der an den Stützgliedern festgelegt ist, daß der Flansch eine relativ ebene stromabwärtige Seite hat, die an einer der ebenen Flächen des Stützrings (16) abgestützt ist, und daß sich der Stützring zum Abstützen des Übergangsbereiches im wesentlichen unter den ganzen Übergangsbereich erstreckt.

**Revendications**

1. Un disque de rupture à renflement invese (18) comportant un dôme préformé (40), une collerette (41) entourant ledit dôme, une région de transition (42) entre ledit dôme et ladite collerette et une rainure concentrique (44), caractérisé en ce que ladite rainure (44) est formée dans une partie substantielle de ladite région de transition.

2. Un disque selon la revendication 1, caractérisé en ce que ladite rainure s'étend le long d'une première partie substantielle de ladite région de transition et est discontinue sur une seconde partie de ladite région de transition en définissant ainsi une zone formant patte (45) le long de ladite seconde partie de la région de transition.

3. Un disque selon la revendication 2, caractérisé en ce qu'un premier rayon de courbure est associé à ladite région de transition le long de ladite rainure, et un second rayon de courbure est associé à ladite région de transition dans ladite zone formant patte et est sensiblement différent dudit premier rayon de courbure.

4. Un disque selon la revendication 1, caractérisé en ce que ladite rainure est sensiblement de même étendue que ladite région de transition et en ce que ladite rainure comporte une première partie ayant une première profondeur dans une zone formant patte et une seconde partie ayant une seconde profondeur, ladite première partie de la rainure étant dans l'ensemble continue.

5. Un disque de rupture à renflement inverse selon la revendication 1, caractérisé en ce que le dôme comporte une couronne à son sommet et une périphérie espacée radialement et éloignée de ladite couronne, en ce que la rainure (113) dans ladite région de transition (108), définie une zone formant patte (103) rejoignant ledit dôme et

11

ladite collerette, ladite rainure ayant une profondeur réduite dans ladite zone formant patte par comparaison au reste de ladite rainure et en ce qu'un moyen d'amorçage de défaillance est positionée entre ladite zone formant patte et ladite couronne au sommet du dôme de façon à produire une défaillance initiale dudit disque pendant sa rupture entre ladite zone de patte et ladite couronne.

6. Un disque selon la revendication 5, caractérisé en ce qu'une région de déchirure s'étend le long d'une première partie de ladite région de transition afin que ledit dôme se sépare de ladite collerette le long de ladite région de déchirure pendant la rupture dudit disque, en en ce que le reste de ladite région de transition qui n'est pas défini comme ladite région de déchirure définit une zone formant patte (103), ladite zone formant patte restant unitaire pour maintenir la liaison dudit dôme avec ladite collerette pendant la rupture dudit disque, et en ce que ledit moyen d'amorçage de défaillance est placée sur ledit dôme entre ladite zone formant patte (103) et ladite couronne.

7. Un disque selon la revendication 5 ou la revendication 6, caractérisé en ce que ledit moyen d'amorçage de défaillance comprend une indentation (114) placée non-symétriquement sur le dôme et espacée de et située entre ladite zone formant patte et ladite couronne, et en ce que l'épaisseur du dôme à ladite indentation est approximativement la même que l'épaisseur dudit dôme dans sa partie restante.

8. Un disque selon la revendication 5, caractérisé en ce que le moyen d'amorçage de défaillance consiste dans une augmentation du rayon de courbure dans la région de transition à l'intérieur de la zone formant patte par comparaison au reste de la région de transition.

9. Un disque selon la revendication 5, caractérisé en ce qu'un moyen de montage (2, 3, 11, 16) est prévu pour le montage dudit disque dans un système de décharge, ledit moyen de montage comportant une saillie (34) s'étendant radialement vers l'intérieur en un endroit aligné en aval avec ladite zone formant patte de façon que, quand ledit disque de rupture se rompt, ledit dôme tourne autour de ladite zone formant patte et entre en contact avec ladite saillie.

10. Un disque de rupture à renflement inverse selon la revendication 5, caractérisé en ce que la zone formant patte (45) s'étend le long d'une première partie de la région de transition et relie de façon articulée ladite collerette avec ledit dôme lors de la rupture dudit disque, et en ce que la rainure (44) est placée dans, et est de même étendu avec une longueur substantielle de ladite région de transition à l'extérieur de ladite première partie de région de transition, ladite rainure coopérant avec ladite zone formant patte afin de faciliter le déchirement dudit dôme par rapport à ladite collerette et à limiter le déchirement dans ladite zone formant patte pendant la rupture dudit disque.

11. Un ensemble à disque de rupture comprenant un disque de rupture à renflement inverse selon la revendication 1, caractérisé en ce qu'une monture (2, 3) est prévu pour la fixation du disque (18) dans un système de décharge de telle sorte que le disque empêche le passage d'un fluide au travers du système de décharge jusqu'à la rupture du disque, en ce que le disque comporte une zone formant patte (103) définie sur lui dans une partie de la région de transition et une zone de déchirement dans un reste de la région de transition.

12. Un ensemble selon la revendication 11, caractérisé en ce que la rainure (44) comporte un secteur ayant une profondeur en relation avec lui, ledit secteur étant continu et de même étendue que ladite région de transition à l'extérieur de ladite zone formant patte.

13. Un ensemble selon la revendication 11, caractérisé en ce que le dôme, quand il est rompu, forme au moins un pétale relié de façon articulée à ladite collerette par ladite zone formant patte et en ce qu'une saillie incurvée (34) est positionnée en aval dudit pétale de telle sorte que ledit pétale entre en contact avec ladite saillie quand le pétale pivote sur ladite zone formant patte.

14. Un ensemble selon la revendication 13, caractérisé en ce que la monture comprend un premier (2) et un second (3) éléments de support et un moyen de fixation (6) pour bloquer lesdits éléments ensemble, une bague annulaire de support (16) comportant des surfaces relativement planes sur ses deux côtés ainsi qu'une saillie (34) s'étendant radialement vers l'intérieur, ladite bague de support étant maintenue en position par lesdits éléments de support, en ce que ladite collerette (41) comporte un côté d'aval relativement plat, ledit côté plat de la collerette étant supporté par une desdites surfaces planes de la bague de support (16), ladite bague de support s'étendant en dessous de pratiquement la totalité de ladite région de transition pour la soutenir.

Fig.1.

Fig.2.

Fig.3.

Fig.4.

# Fig. 5.

**Fig. 25.**

**Fig. 6.**

**Fig. 7.**

**Fig. 8.**

**Fig. 9.**

3

**Fig. 10.**

**Fig. 11.**

**Fig. 12.**

**Fig. 13.**

**Fig. 14.**

**Fig. 15.**

**Fig. 16.**

**Fig. 26.**

**Fig. 17.**

**Fig. 23.**

**Fig. 21.**

**Fig. 22.**

**Fig. 24.**

# Fig.18.

# Fig.19.

# Fig.20.

# Fig. 27a.

230
231
232

# Fig. 28a.

235
236

# Fig. 27b.

250
257
258
252
251

# Fig. 28b.

255
256

# Fig. 27c.

260
267
261
268
262

# Fig. 28c.

265
266

**Fig. 29.**

**Fig. 30.**

**Fig. 31.**